# EUROPEAN PATENT APPLICATION

(11) **EP 1 434 431 A1**
(43) Date of publication of application: **30.06.2004**
(21) Application number: 03258107.6
(22) Date of filing: 22.12.2003
(51) Int. Cl.: H04N 5/445, H04N 7/173

(54) **EPG delivery and television apparatus**

(30) Priority: 27.12.2002 KR 2002085446
(71) Applicant: SAMSUNG ELECTRONICS CO., LTD., Suwon-Shi, Gyeonggi-Do 442-742 (KR)
(72) Inventor: Oh, Keum-yong, Suwon-si Gyeonggi-do (KR)
(74) Representative: Geary, Stuart Lloyd

(57) **Abstract**

A method for transmitting an extensible markup language (XML)-based electronic program guide (EPG) template for a user-preference program guide and a reception device thereof, are provided. The transmission method includes a cable network company converting an XML-based EPG into an XML-based EPG template for a user-preference program guide, transmitting the converted result to a reception device, and providing the reception device with a style format related to the XML-based EPG template document through an extensible style sheet language (XSL)-based document. The reception device stores and analyzes the XSL document related tb the XML-based EPG template document.

## Description

The present invention relates to a method of providing an electronic programme guide to a television apparatus in a television system and to a television apparatus having an electronic programme guide processing function.

Digital television broadcasting systems have recently become common. Since digital broadcasting can provide a large number of channels, a large number of programmes can be broadcast, in comparison with analogue broadcasting systems. Digital broadcasting includes a large amount of programme information that is transmitted as an electronic programme guide (EPG) that allows users to select and view desired programmes. However, the large amount of broadcasting programme information makes it difficult to search for or classify programmes.

In conventional EPG transmission and reception systems, a network company produces programmes and a programme guide for viewers to peruse. The EPG information is displayed differently according to the receiver's manufacturer or the class of the receiver. To solve this problem, EPGs have been produced using extensible markup language (XML). However, XML-based EPGs force users to conduct unnecessary searches through large amounts of programme information, and limit the screen configuration to only a script language contained in the XML-based EPG itself.

Also, having a large number of programmes, increases the size of a programme guide and thereby causes difficulties for the programme guide producer and the receiver manufacturer. Even if XML is used to solve this problem, a simple XML document imposes on users the burden of perusing through programme guide information in detail or performing a sequence of steps using a provided search tool in order to find and register their preferred programmes. Also, it is difficult for a user to configure a screen as the user desires because a programme guide can only be displayed on the screen in a script language contained in an XML document.

KR-A-2001-87373 discloses a conventional method and apparatus for transmitting and receiving an EPG. The disclosed method and apparatus enable easy searching for programmes broadcast over many channels as in a digital TV broadcasting system, and reduce the number of development processes. The transmission method involves producing programme guide data including a control signal for controlling the display form when the programme guide information is displayed on a display device, and transmitting the programme guide data together with video and audio signals. Also, the reception apparatus receives a broadcasting signal including the programme guide data and video and audio signals. The reception apparatus includes a receiver that receives the broadcasting signal, an extractor that extracts the programme guide data from the received broadcasting signal, and a display processor that processes the programme guide data based on the included control signal. Accordingly, since the EPG is written in XML and the broadcasting station or the content producer inserts characters, images or sounds into the programme guide data, a variety of display modes are possible and the EPG is relatively easy for a user to manipulate. However, it is still not possible for a user to obtain and organize programme guide information that matches his/her preferences through simple manipulation.

Since several hundred programme services are possible, users can only either view programmes one-by-one in an order that is not of their choosing or conduct lengthy searches to locate programmes. Furthermore, size difference among displays is a source of difficulty for service producers, and thus production of service programmes without consideration of the size of the display can result in a screen configuration not matching a user's preference.

A method of providing an electronic programme guide to a television apparatus in a television system, according to the present invention, is characterised in that the electronic programme guide is provided as an electronic XML document. The XML document may be provided by providing a template, DTD or schema which is used to create a document populated with EPG data obtained off-air.

The electronic XML document may be created by applying a transform to a master electronic XML document, said transform being determined in dependence on a user-related criterion.

The method may include providing an electronic XSL document to said apparatus, the XSL document being configured for generating a display control XML document from said provided XML document. Preferably, the XSL document provided is provided in dependence on a user-related criterion. Preferably, said XSL document is provided in response to electronic requests from said apparatus.

A television apparatus having an electronic programme guide processing function, according to the present invention, is characterised by processing means for processing an electronic XML programme guide document to provide display control signals for controlling a display to display programme guide information.

Preferably, the processing means comprises XSLT processing means for transforming an electronic XML programme guide in accordance with an electronic XSL document to produce a display control XML document. More preferably, the apparatus includes user input means and the processing means is configured for editing an programme guide XSL document in dependence on user inputs made using the user input means.

Preferably, the apparatus includes memory means for storing said electronic documents.

The apparatus may be a television set or a set top box.

Additional preferred and optional features are set forth in claims 11 to 26 appended hereto.

An embodiment of the present invention will now be described, by way of example, with reference to the accompanying drawings, in which:
Figure 1 is a block diagram illustrating an example of an extensible style sheet language (XSL) conversion according to the present invention;
Figure 2 is a block diagram illustrating an example of transmission and reception of an extensible markup language (XML) template document and a related XSL document according to the present invention;
Figure 3 is a block diagram illustrating an example of transmission and reception of an extensible markup language template document according to present invention;
Figure 4 is a block diagram illustrating an example of processing an extensible markup language template document and an XSL document for a display according to the present invention;
Figure 5 is a block diagram illustrating an example of producing an extensible markup language template document and a step of storing an XSL document according to an embodiment of the present invention; and
Figure 6 is a block diagram illustrating an example of a variety of display structures of an extensible markup language template document transformed through ah XSL document according to the present invention.

XML was recommended by W3C in 1998.

XML documents are self-describing and have a tree-structure which can easily be searched. XML documents for different purposes can be defined using a document type definition (DTD) or a schema. XML is currently used in many fields in which the transfer of data between disparate systems is required.

Data, such as programme start times, programme end times and programme titles, can be stored in XML documents. Furthermore, programme data can be polymorphic in that different information is applicable to different programmes. For example, in the case of a news programme, a node for the programme event and a child node for the editor can be created. Also, in the case of a weather programme, local temperatures, high and low temperatures, etc. can be stored in child nodes and, in the case of an entertainment programme, the event node can be created with the actors' names being stored in child nodes. Aside from these examples, various other nodes can be created. As such, a single XML document, including the various necessary involved nodes, can be created according to programme features and a viewer's requirements. In the context of the present invention, such a document will be referred to as "an XML template document".

A programme guide list provided from a cable network company, or other digital television service provider, is configured by reflecting programme information, or a user's age or tastes. That is, a programme guide list according to the present invention provides an XML-based EPG template document and an XSL (extensible Stylesheet Language) document which can be applied to the EPG document. Also, XPath syntax can be used to access a node in different XML template, documents, through another document, and can configure a personalized programme guide list that reflects a user's taste.

A cable network company transmits an XML-based EPG template document, which is adapted for a user with reference to features of services or programmes, viewing times of services or programmes and the age and tastes of the user, *inter alia*. A user receives the document via a receiver, where it is parsed by an XML parser. The received XML-based EPG template document is used as a primary profile for the user, through which the user can filter the large amount of programme guide information. The cable network company transmits an XSL document simultaneously so that data of the XML document can be displayed according to the user's preferences. The receiver parses the XML template document and displays data through a graphics engine according to the XSL document by an XSL transformation in a processor. The XSL document can be viewed as functioning as a secondary profile.

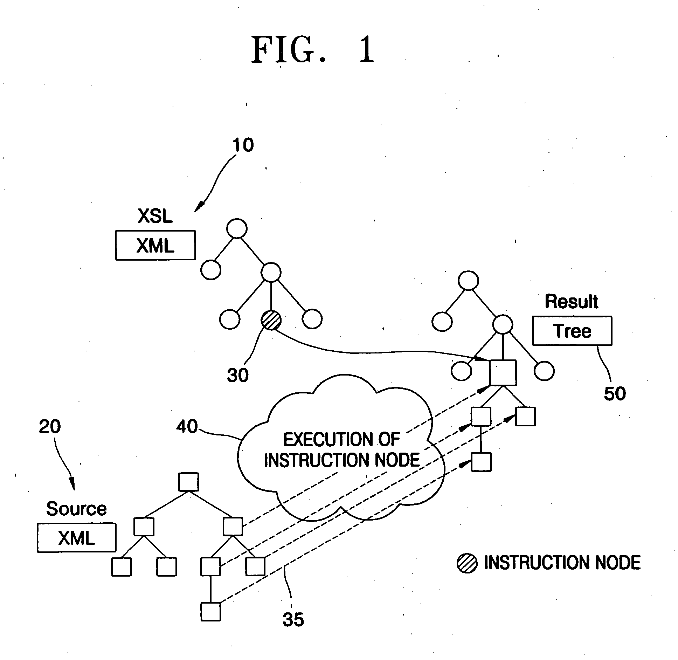

Referring to Figure 1, an XSL style sheet 10 includes a rule including a single-path tree. An instruction node 30 gains access to a node that is a part of an input tree 20 in an XML document, when processing an XPath expression. Based on the rule, a new result tree is created as a single-path tree according to processing of another instruction node. A special merging process 40 is performed on XML-based EPG template documents by using the XSL conversion technology. It is possible to access a particular node in each document by using XSL 10 and XPath 35 without having to make a new XML document through the merging process and configure a new single tree 50 by collecting the accessed nodes. That is, a viewer can register and delete his or her desired programme information list from his or her selected XML-based EPG template document provided from the cable network company, by using XSL.

A first step (Phase 1) of distribution of the XML template document from a cable network company, and the related XSL document, are described below.

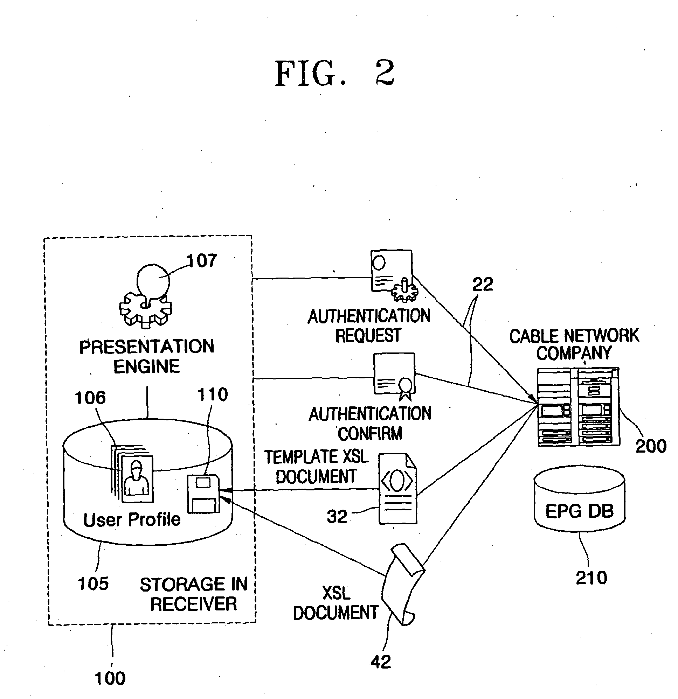

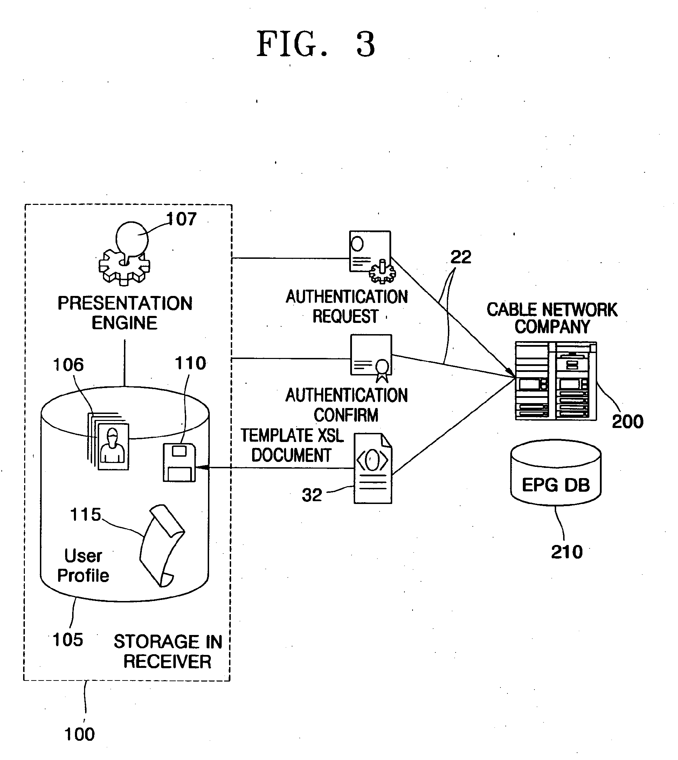

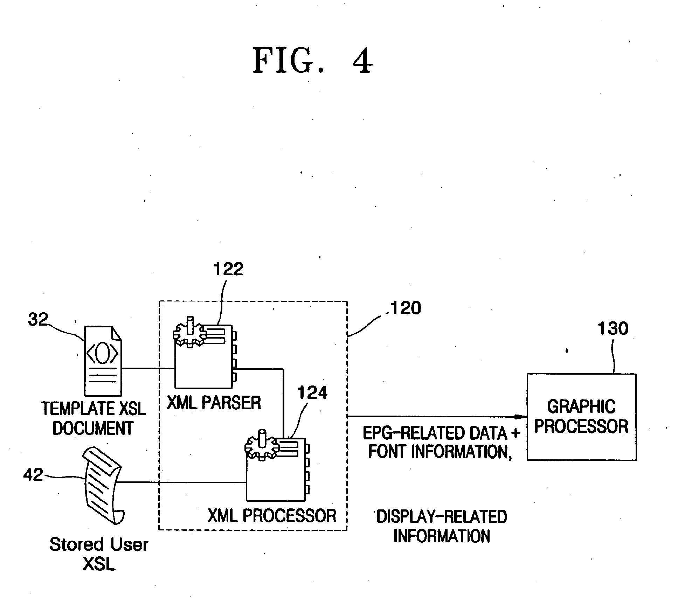

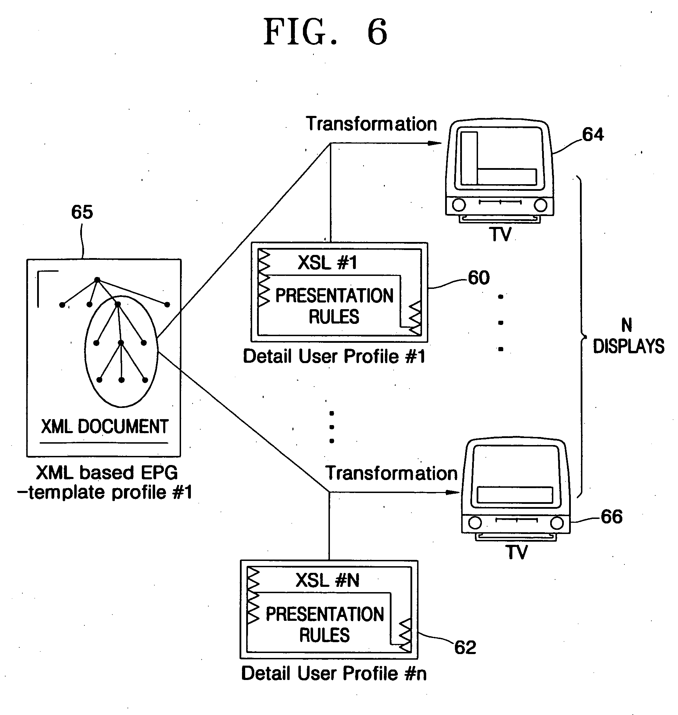

As described above, a user downloads a preferred XML-based EPG template 32 (hereinafter referred to as XML template document 32) from an EPG database 210 of a cable network company 200, by means of an authentication process 22 of a server, to middle-ware 110 of a storage unit 105 in a receiver 100. The receiver 100 conducts a search for an XSL document 42 to be applied to the XML template document 32 inside the system, and if there is no XSL document 42 in the system, the receiver 100 downloads an XSL document 42 provided by the cable network company 200. A user's profile 106 formed in the receiver 100 is processed by a presentation engine 107 of Figure 2 or 3, or a graphics processor 130 of Figure 4, and is displayed on a display 64 or 66 of Figure 6 connected to the receiver 100.

As shown in Figure 4, an XML parser 122 in a data analysis processor 120 within the receiver 100 parses the XSL template document 32, and transfers both EPG-related data and display-related information which are extracted through an XSL processor 124 together with an XSL document to be applied, to the graphics processor 130. The user can peruse an EPG list selected through the above-described process.

A second step (Phase 2) of the EPG perusal using the stored XSL document 42 will be described below.

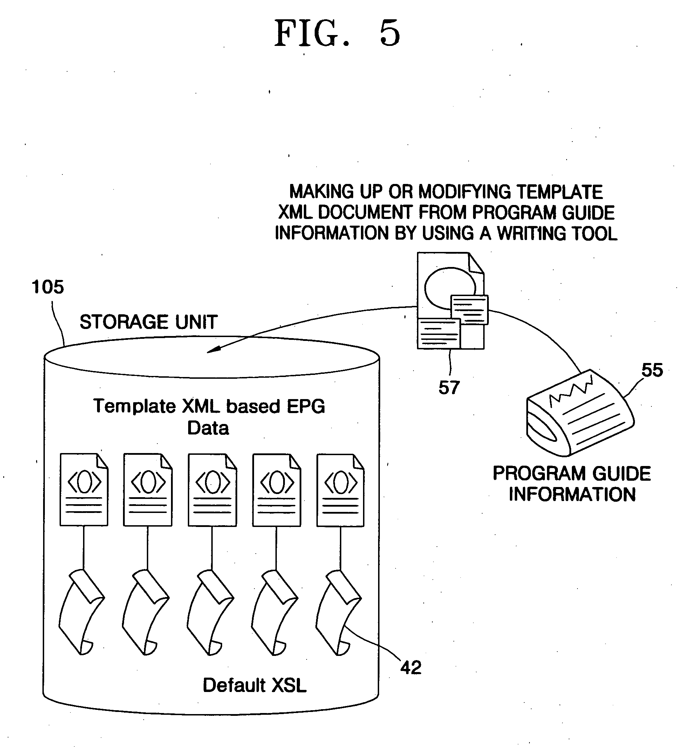

As shown in Figure 5, in the present invention, an XML-based EPG template is made up of programme guide information 55, by using a user interface (UI) or a simple tool 57 provided by the cable network company, and is stored in a storage unit 105 in the receiver 100. Then, a programme can be added or deleted using the XSL document stored in the receiver 100 or the XSL document 42 downloaded from the cable network company. Then, the addition or deletion result is reflected in the XSL document, and is stored in the storage unit 105 within the receiver 100 as a user defined XSL document 115.

As shown in Figure 3, a list matching a user's preferences can be viewed using the stored XSL document 115, without modification of the EPG-related document provided by the cable network company 200. The XML template document 32 transmitted by the cable network company 200 is converted by the stored XSL document 32 and displayed on a display screen. Each viewer can store each XSL documents 60, 62, as shown in Figure 6, and construct his or her own screen through a selection process from the XML template document 32 when retrieving an EPG programme, to thereby display the constructed screen on a display 64, 66.

As described above, in a method for transmitting an extensible markup language (XML)-based EPG template for a user-preference programme guide and a reception device thereof, according to an embodiment of the present invention, a user can select his or her preferred list, without having to search through programmes one-by-one, by using a variety of XML-based EPG templates provided by a cable network company. Also, since the created XML template document can be reconstructed as a new list through an extensible path (XPath), a cable network company can avoid the burdensome process of constructing an EPG database in order to create new lists.

Also, a user displays his or her desired contents through XSL conversion. Thus, several users using the same receiver can each construct their own individual desired list and an individual desired screen pattern by using a storing process in the receiver. For this purpose, an XSL processor is constructed by software in a receiver, and a graphics engine capable of processing the XSL document to be displayed on a screen is installed in the present invention. As a result, the present invention makes digital broadcasting more convenient for cable network companies (or programme guide producers) and receiver users.

## Claims

1. A method of providing an electronic programme guide to a television apparatus in a television system, the method being **characterised in that** the electronic programme guide is provided as an electronic XML document (65).

2. A method according to claim 1, wherein said electronic XML document (65) is created by applying a transform (10) to a master electronic XML document (20), said transform being a determined in dependence on a user-related criterion.

3. A method according to claim 1 or 2, including providing an electronic XSL document (42) to said apparatus, the XSL document (42) being configured for generating a display control XML document from said provided XML document (42).

4. A method according to claim 3, wherein the XSL document (42) provided is provided in dependence on a user-related criterion.

5. A method according to claim 3 or 4, wherein said XSL document (42) is provided in response to an electronic request from said apparatus (100).

6. A television apparatus having an electronic programme guide processing function, the apparatus being **characterised by** processing means for processing an electronic XML programme guide document (65) to provide display control signals for controlling a display (64, 66) to display programme guide information.

7. A television apparatus according to claim 6, wherein the processing means comprises XSLT processing means for transforming an electronic XML programme guide (65) in accordance with an electronic XSL document (42) to produce a display control XML document.

8. A television apparatus according to claim 7, including user input means, wherein the processing means is configured for editing an programme guide XSL document (42) in dependence on user inputs made using the user input means.

9. A television apparatus according to claim 6, 7 or 8, including memory means (105) for storing said electronic documents.

10. A television apparatus according to any one of claims 6 to 9, wherein said apparatus is a television set or a set top box. ,

11. A method for transmitting a program guide, comprising the steps of:
converting an extensible markup language (XML)-based electronic program guide (EPG) into an XML-based EPG template for a user's preferred program guide at a cable network company; and
transmitting the XML-based EPG template to a receiver.

12. The transmission method of claim 11, wherein the cable network company provides a style form related to the XML-based EPG template for the receiver, through conversion into an extensible stylesheet language (XSL) document.

13. The transmission method of claim 12, wherein the receiver stores and analyzes the XSL document related to the XML template document.

14. A reception apparatus that receives a program guide transmitted from a cable network company, the reception apparatus comprising:
a storage unit that stores an extensible markup language (XML)-based electronic program guide (EPG) template document for a user's preferred program guide which has been converted and transmitted from a cable network company;
an XML parser that parses the stored XML-based EPG template document; a graphics processor for graphically processing the parsed XML document and displaying the graphically processed result on a display.

15. The reception apparatus of claim 14, further comprising:
a storage unit that stores an extensible stylesheet language (XSL) document related to the XML-based EPG template document; and
an XSL processor that processes the stored XSL document.

16. The reception apparatus of claim 15, wherein the graphics processor processes the parsed XML-based EPG template document and the XSL document so that extracted EPG-related data and display-related information is displayed on the display.

17. The reception apparatus of claim 15, further comprising a storage unit that stores and manages various XSL documents defined by a user which are related to the same XML-based EPG template document.

18. A method of providing an electronic program guide (EPG) that allows for selecting a program without having to scroll through the entire EPG, the method comprising:
providing an extensible markup language (XML) based EPG template;
providing an extensible stylesheet language (XSL) based EPG template;
transmitting the XSL based EPG template and the XML based EPG template to a receiver; and
decoding the XML based EPG template by using the XSL based EPG template to provide an XSL document.

19. The method of claim 18, further comprising:
editing the XML based EPG template by using the XSL based EPG template to provide desired programming for the XSL document.

20. The method of claim 19, wherein the step of editing comprises adding or deleting programming from the XML based EPG template.

21. The method of claim 18, further comprising:
displaying contents of the XSL document on a screen.

22. The method of claim 18, further comprising:
merging the XML based EPG template via the XSL based EPG
template and a single path tree to access a node in the XML based EPG template.

23. The method of claim 18, wherein the XSL document is user specific.

24. The method of claim 18, wherein the XML based EPG template includes a program feature and a viewer feature.

25. The method of claim 24, wherein the program feature comprises a program start time, a program end time, a program title and a program type.

26. The method of claim 24, wherein the viewer feature includes an age group, type of program and viewing times.
